# EUROPÄISCHE PATENTSCHRIFT

(11) **EP 1 268 343 B1**
(45) Veröffentlichungstag und Bekanntmachung des Hinweises auf die Patenterteilung: **22.12.2004**
(21) Anmeldenummer: 01938045.0
(22) Anmeldetag: 26.03.2001
(51) Int. Cl.: C01B 33/04, B01J 8/02

(54) **VERFAHREN UND ANLAGE ZUR HERSTELLUNG VON SILAN**
METHOD AND FACILITY FOR PRODUCING SILANE
PROCEDE ET INSTALLATION POUR PRODUIRE DU SILANE

(30) Priorität: 07.04.2000 DE 10017168
(43) Veröffentlichungstag der Anmeldung: 02.01.2003
(73) Patentinhaber: SolarWorld Aktiengesellschaft, 53113 Bonn (DE)
(72) Erfinder: MÜLLER, Dirk, 51465 Bergisch Gladbach (DE); RONGE, Georg, 40549 Düsseldorf (DE); SCHÄFER, Johannes-Peter, 51515 Kürten (DE); LEIMKÜHLER, Hans-Joachim, 51375 Leverkusen (DE); STRAUSS, Ulrike, 47057 Duisburg (DE); BLOCK, Hans-Dieter, 51381 Leverkusen (DE)
(74) Vertreter: Rau, Albrecht
(86) Internationale Anmeldenummer: PCT/EP2001/003393
(87) Internationale Veröffentlichungsnummer: WO 2001/077017

(56) Entgegenhaltungen:
- EP-A- 0 063 067
- EP-A- 0 093 640
- FR-A- 2 118 725
- FR-A- 2 261 977
- US-A- 4 340 574
- PATENT ABSTRACTS OF JAPAN vol. 011, no. 013 (C-397), 14. Januar 1987 (1987-01-14) & JP 61 191513 A (DENKI KAGAKU KOGYO KK), 26. August 1986 (1986-08-26)

## Beschreibung

Die vorliegende Erfindung betrifft ein kontinuierliches Verfahren zur Herstellung von Silan SiH₄ durch katalytisches Disproportionieren von Trichlorsilan SiHCl₃ zu SiH₄ und Siliciumtetrachlorid SiCl₄. Gegenstand der Erfindung ist auch eine Anlage zur Durchführung des Verfahrens.

SiH₄ ist ein hervorragend geeignetes Ausgangsmaterial, aus dem, gegebenenfalls nach weiterer Reinigung, durch thermische Zersetzung sehr reines Silicium in Halbleiterqualität abgeschieden werden kann. Der Bedarf an Reinst-Silicium wächst stark und damit der Bedarf an reinem Silan, dessen hervorragende Eignung zur Reinst-Silicium-Erzeugung immer mehr erkannt und genutzt wird.

Unter den in der Literatur beschriebenen Verfahren zur Herstellung von Silan ist die Erzeugung aus Trichlorsilan durch Disproportionierung wirtschaftlich vorteilhaft. Bekannt ist es, dass Amine, speziell tertiäre Amine und ihre Hydrochloride und quartäre Ammoniumchloride, sowohl in flüssiger (DE 3 500 318 A1) als auch in fester Form, z.B. an feste Träger gebunden, als Katalysatoren die Disproportionierung des Trichlorsilans in wirtschaftlich vorteilhafter Weise beschleunigen. An feste Träger gebundene Amine (US-A-4 701 430, US-A-5 026 533, DE 3 500 318 A1, DE 3 311 650 C2, DE-OS-2 507 864) werden vorzugsweise deshalb eingesetzt, weil damit der Eintrag von verunreinigenden Aminen in die reagierende gasförmig-flüssige Silan-Chlorsilan-Phase vermieden werden kann.

Die in einigen beschriebenen Verfahren gewählten flüssigen Katalysatoren haben den Nachteil, dass sie über die Zeit langsam aus dem Reaktionsteil ausgetragen werden, da sie niemals vollständig von den Reaktionsprodukten abgetrennt werden können. Die mitgeschleppten Katalysatormengen führen in nachfolgenden Verfahrensschritten oder in einem Kreislaufsystem auch in vorgeschalteten Verfahrensschritten zu Problemen, weil sie sich an bestimmten Stellen des Systems sammeln können und dort z.B. unerwünschte Reaktionen katalysieren können. Auch gelingt es mit einem flüssigen Katalysator nicht, diesen möglichst gleichmäßig in der Kolonne zu verteilen, sondern er wird sich aufgrund seines spezifischen Dampfdrucks lokal aufkonzentrieren. Dieses Problem wird durch die in DE 3 500 318 A1 vorgeschlagene Verwendung zweier Katalysatoren mit unterschiedlichen Siedepunkten keinesfalls behoben, sondern allenfalls gemindert.

In der Regel wird die Disproportionierung von Trichlorsilan in mehreren Schritten, beispielsweise in zwei Schritten durchgeführt. Dabei ist auch bereits versucht worden, einzelne Disproportionierungsschritte nach dem Prinzip der Reaktivdestillation ablaufen zu lassen. Die Reaktivdestillation ist durch Kombination von Reaktion und destillativer Trennung in einem Apparat, insbesondere einer Kolonne gekennzeichnet. Durch die fortlaufende destillative Entfernung der jeweils leichtest siedenden Komponente in jedem Raumelement wird stets ein optimales Gefälle zwischen Gleichgewichtszustand und tatsächlichem Gehalt an leichter siedenden Komponenten bzw. leichtest siedender Komponente aufrecht erhalten, so dass eine maximale Reaktionsgeschwindigkeit resultiert. In JP 01 317 114 ist zum Beispiel eine Reaktivdestillation für den Disproportionierungsschritt von Dichlorsilan zu Silan und einem Trichlorsilan/Siliciumtetrachlorid-Gemisch angegeben. In DE-OS-2 162 537 ist ebenfalls eine Reaktivdestillation für diesen Disproportionierungsschritt angegeben. Darüber hinaus zeigt DE-OS-2 162 537 auch eine Reaktivdestillation für den Disproportionierungsschritt von Trichlorsilan zu Dichlorsilan und Siliciumtetrachlorid.

Aus der DE-OS-2 507 864 ist ein Verfahren zur Herstellung von Silan bekannt, das dadurch gekennzeichnet ist, dass man in ein Bett eines im Reaktionsmedium unlöslichen Anionenaustauscherharzes, enthaltend tertiäre Amino- oder quaternäre Ammoniumgruppen an einem Kohlenstoffatom, Trichlorsilan einführt und die Temperatur des Harzbettes so hält, dass Trichlorsilan disproportioniert wird einerseits zu Produkten, die im Bett aufsteigen, und andererseits zu Siliciumtetrachlorid, das kondensiert und zum Kolonnensumpf fließt, und dass man die Temperatur am oberen Teil des Bettes über dem Siedepunkt von Silan und unter dem Siedepunkt von Monochlorsilan hält und das von Chlorsilanen praktisch freie Silan aus dem Bett gewinnt.

Dieses Verfahren zeichnet sich den anderen bekannten Verfahren gegenüber dadurch aus, dass es
(1) apparativ einstufig ist, also Silan und Siliciumtetrachlorid als gewünschte, angereicherte Produkte von verschiedenen Stellen des gleichen Apparates zu entnehmen gestattet, dass es also mit vergleichsweise geringem apparativen Aufwand und reduziertem Energieeinsatz auskommt, dass es
(2) die Produkte Silan (in Konzentrationen zwischen 96 bis 98 % SiH₄) und Siliciumtetrachlorid (in Konzentrationen z.B. zwischen 70 bis 80 % SiCl₄) in vergleichsweise hoher Konzentration zu erzeugen gestattet, ohne weitere Hilfsaggregate zu benötigen, dass es
(3) dank des festen unlöslichen Katalysators (im Weiteren katalytisch wirksamer Feststoff genannt) nur minimalen Eintrag von Verunreinigungen aus dem Katalysator in die Reaktionsmischung aufweist und im Vergleich zu den flüssigen löslichen Katalysatoren einen deutlich geringeren Trennaufwand für die Abtrennung der Katalysatoren erfordert und auch die Ansammlung von flüchtigen, flüssigen Katalysatoren an bestimmten Kolonnenteilen strikt vermeidet und dass es
(4) durch das Prinzip der Reaktivrektifikation den Energieaufwand für die Trennung der in den einzelnen Gleichgewichtsstufen der Disproportionierung entstehenden Silane oder Chorsilane verringert.

Allerdings besteht ein schwerwiegender Nachteil dieses in der DE-OS-2 507 864 beschriebenen Verfahrens darin, dass der für die Trennung der Silane oder Chlorsilane aufgewendete Energiebetrag vollständig auf einem den Kondensationstemperaturen entsprechenden sehr niedrigen Temperaturniveau abgeführt werden muß. Am Kopf der Kolonne muß nach DE-OS-2 507 864 nämlich eine Temperatur unterhalb der Kondensationstemperatur von Monochlorsilan SiH₃Cl eingestellt werden und im Bereich des Einlaufs von Trichlorsilan SiHCl₃ eine Temperatur, die die Verdampfung des Trichlorsilans ermöglicht. Somit wird die zur Verdampfung der verschiedenen Chlorsilane und des Silans in den einzelnen Abschnitten der Kolonne erforderliche Energie letztlich bei einer Temperatur unterhalb der Kondensationstemperatur des Monochlorsilans abgeführt, also abhängig vom Druck unterhalb von -50°C bis -120°C. Nun ist die Wärmeabfuhr auf niedrigem Temperaturniveau bekanntermaßen aufwendig und mit zusätzlichem Energieverbrauch verbunden und zwar zunehmend, je niedriger die Temperatur des Kühlmediums einzustellen ist.

Aufgabe der Erfindung ist es, ein kontinuierliches Verfahren sowie eine Anlage zur Herstellung von Silan durch katalytische Disproportionierung von Trichlorsilan zu Silan und Siliciumtetrachlorid anzugeben, bei dem die Disproportionierung reaktiv/destillativ an katalytisch wirkenden Feststoffen abläuft und Silan und Siliciumtetrachlorid in vergleichsweise hoher Konzentration gewonnen werden, wobei der für die Trennung der disproportionierten Produkte und deren Kondensation erforderliche Aufwand minimiert ist. Die Wärmeabfuhr soll im wesentlichen bei einem Temperatumiveau erfolgen, bei dem Kühlmittel mit einer Temperatur, die ohne hohen Aufwand erreichbar ist, einsetzbar sind, um den apparativen und energetischen Aufwand zur Kälteerzeugung für die Wärmeabfuhr zur Kondensation der Produkte zu reduzieren.

Erfindungsgemäß wurde ein kontinuierliches Verfahren zur Herstellung von SiH₄ durch katalytische Disproportionierung von Trichlorsilan SiHCl₃ zu Silan SiH₄ und Siliciumtetrachlorid SiCl₄ entwickelt, das dadurch gekennzeichnet ist, dass die Disproportionierung in mindestens 2 katalytisch wirkenden Feststoff enthaltenden reaktiv/destillativen Reaktionsbereichen unter einem Druck im Bereich zwischen 500 mbar bis 50 bar durchgeführt wird, wobei das in einem ersten Reaktionsbereich erzeugte leichter siedende SiH₄-haltige Produktgemisch im Temperaturbereich von - 40°C bis 50°C zwischenkondensiert wird, das dabei nicht kondensierte, mit leichtflüchtigen Chlorsilanen - insbesondere mit Dichlorsilan SiH₂Cl₂, Monochlorsilan SiH₃Cl und Silan SiH₄-angereicherte Produktgemisch in mindestens einen weiteren reaktiv/destillativen Reaktionsbereich geführt wird und das im Zwischenkondensator kondensierte mit schwerflüchtigen Chlorsilanen angereicherte Gemisch, das insbesondere hohe Anteile an Trichlorsilan SiHCl₃ und Siliciumtetrachlorid SiCl₄ enthält, in den ersten Reaktionsbereich zurückgeführt wird.

Vorteilhaft wird das erzeugte leichter siedende SiH₄-haltige Produktgemisch im Kopfkondensator teilweise oder vollständig kondensiert.

Vorzugsweise wird die Disproportionierung in 2 bis 10, besonders bevorzugt in 2 bis 5 und insbesondere bevorzugt in 2 reaktiv/destillativen Reaktionsbereichen durchgeführt.

Geeignete katalytisch wirksame Feststoffe sind bekannt und beispielsweise in der DE-OS-2 507 864 beschrieben. Es sind beispielsweise solche Feststoffe geeignet, die an einem Gerüst aus Polystyrol, vernetzt mit Divinylbenzol, Amino- oder Alkylenamino-Gruppen tragen. Als Amino- oder Alkylenamino-Gruppen seien beispielsweise genannt: Dimethylamino-, Diethylamino-, Ethylinethylamino-, Di-n-propylamino-, Di-iso-propylamino-, Di-2-chlorethylamino-, Di-2-Chlorpropylamino-Gruppen und deren Hydrochloride oder aber die durch Methylierung, Ethylierung, Propylierung, Butylierung, Hydroxyethylierung oder Benzylierung daraus gebildeten Trialkylammonium-Gruppen mit Chlorid als Gegenion. Selbstverständlich können im Fall quartärer Ammoniumsalze oder protonierter Ammoniumsalze auch katalytisch wirksame Feststoffe mit anderen Anionen, z.B. Hydroxid, Sulfat, Hydrogensulfat, Bicarbonat u.a. in das erfindungsgemäße Verfahren eingeführt werden, eine Umwandlung in die Chioridform ist unter den Reaktionsbedingungen mit der Zeit aber unvermeidbar, was auch für organische Hydroxygruppen gilt. Bevorzugt sind demnach solche Ammoniumsalze, die Chlorid als Gegenion enthalten.

Als katalytisch wirksame Feststoffe sind beispielsweise auch Feststoffe geeignet, die aus einem Polyacrylsäure-Gerüst, speziell einem Polyacrylamid-Gerüst bestehen, das z.B. über eine Alkylgruppe Trialkylbenzylammonium gebunden hat.

Eine andere für das erfindungsgemäße Verfahren geeignete Gruppe katalytisch wirksamer Feststoffe sind beispielsweise solche, die an einem Polystyrol-Gerüst, vernetzt mit Divinylbenzol, Sulfonat-Gruppen angebunden haben, denen als Kationen tertiäre oder quartäre Ammoniumgruppen gegenüberstehen.

Im Regelfall sind makroporöse oder mesoporöse Austauscherharze besser als Gelharze geeignet. Weitere geeignete katalytisch wirksame Feststoffe sind beispielsweise solche, die auf einem festen anorganischen Gerüst wie Kieselsäure oder Zeolith angebundene organische Aminogruppen der obengenannten Art, z.B. solche mit einer 3-Siloxypropyldimethylamino-Gruppe, tragen (US-A-4 701 430). Die geeigneten, katalytisch wirksamen Feststoffe werden üblicherweise in Perlform eingesetzt.

Eine Reihe geeigneter katalytisch aktiver Feststoffe sind kommerziell erhältlich.

Verschiedene geeignete Aktivierungs- und Vorbehandlungsmethoden für diese Katalysatoren sind dem Fachmann bekannt.

In vorteilhafter Ausgestaltung des erfindungsgemäßen Verfahrens wird das SiH₄haltige Produktgemisch zur Konzentrationserhöhung des SiH₄ noch vor Kondensation des SiH₄-Endprodukts von im Gemisch enthaltenen schwerer siedenden Chlorsilanen getrennt. Die Trennung erfolgt entweder bei gleich gehaltenem Druck oder bevorzugt bei einem gegenüber der Zwischenkondensation erhöhtem Druck, so dass die Konzentration des SiH₄ bei höherem Temperaturniveau zu erreichen ist und somit bei höherer SiH₄-Konzentration eine geringere Produktmenge zu kondensieren ist. Beim Trennen erhaltenes Chlorsilan wird zweckmäßig in einen der reaktiv/destillativen Reaktionsbereiche zurückgeführt.

Verschiedene Ausgestaltungen der Erfindung werden nachfolgend anhand von Zeichnungen und entsprechenden Ausführungsbeispielen näher erläutert. Die Zeichnungen zeigen im Einzelnen:
- Figur 1: Anlage zur Gewinnung von Silan mit zwei reaktiv/destillativen Reaktionsbereichen, mit Zwischenkondensator und integriertem Verstärkerteil und einem dem Verstärkerteil nachgeschaltetem externen Kopfkondensator zur Kondensation von Silan;
- Figur 2: Anlage zur Gewinnung von Silan mit zwei reaktiv/destillativen Reaktionsbereichen, mit Zwischenkondensator, integriertem Verstärkerteil und integriertem Kopfkondensator zur Kondensation von Silan;
- Figur 3: Anlage zur Gewinnung von Silan mit zwei reaktiv/destillativen Reaktionsbereichen, mit zwei Zwischenkondensatoren und integriertem Verstärkerteil und einem dem Verstärkerteil nachgeschaltetem externen Kopfkondensator zur Kondensation von Silan;
- Figur 4: Anlage zur Gewinnung von Silan mit zwei reaktiv/destillativen Reaktionsbereichen, mit Zwischenkondensator und integriertem Verstärkerteil, einem dem Verstärkerteil nachgeschalteten externen Kondensator, diesem nachgeschalteter Trennkolonne und an der Trennkolonne angeschlossenem Kopfkondensator zur Kondensation von Silan.
- Figur 5: Ausführung mit extern angeordneten Reaktoren.

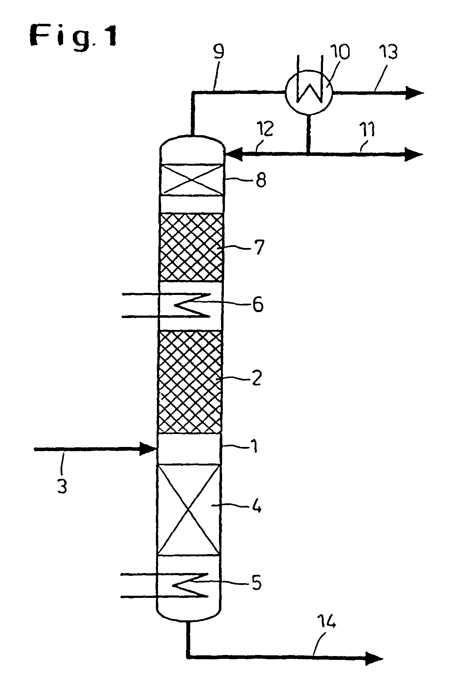

In Figur 1 ist ein Fließschema einer Anlage zur kontinuierlichen Gewinnung von Silan SiH₄ dargestellt, die eine Reaktionskolonne 1 mit reaktiv/destillativen Reaktionsbereichen 2 und 7 zur katalytischen Disproportionierung von Trichlorsilan SiHCl₃ aufweist. Die Disproportionierung in den Reaktionsbereichen 2 und 7 erfolgt in Katalysatorbetten, die jeweils aus einer für die Disproportionierungsprodukte durchströmbaren Schüttgutschicht aus Festkörpern aus katalytisch wirksamen Feststoffen bestehen. Statt einer Schüttgutschicht können im Reaktionsbereich auch gepackte Katalysatorkörper vorgesehen sein.

Das SiHCl₃ wird der Reaktionskolonne 1 über einen Zulauf 3 zugeführt, der in die Kolonne an geeigneter Stelle mündet. Beispielsweise kann der Zulauf in den Abtriebsteil 4, zwischen den reaktiv/destillativen Reaktionsbereich 2 und den Abtriebsteil 4, in die reaktiv-destillative Reaktionszone 2, in den Zwischenkondensator 6 und/oder in den reaktiv/destillativen Reaktionsbereich 7 münden. In den Reaktionsbereichen 2 und 7 wird durch Disproportionierung von SiHCl₃ ein SiH₄-haltiges, im Reaktionsbereich aufsteigendes dampfförmiges Produktgemisch, und ein SiCl₄ enthaltendes, im Reaktionsbereich abströmendes Flüssigkeitsgemisch gebildet.

Die aus dem Reaktionsbereich austretende SiCl₄ enthaltende Flüssigkeit wird in der Reaktionskolonne 1 in einen unterhalb der reaktiv/destillativen Reaktionsbereiche 2 und 7 angeordneten destillativen Abtriebsteil 4 eingeführt, unter dem sich ein Sumpfverdampfer 5 befindet, aus dem als Sumpfprodukt Siliciumtetrachlorid SiCl₄ über einen Abfluß 14 abfließt. Über den Wärmetauscher 5 erfolgt der erforderliche Wärmeeintrag in die Reaktionskolonne zur Disproportionierung von SiHCl₃.

Für das im Reaktionsbereich 2 aufsteigende SiH₄-haltige Produktgemisch ist oberhalb der Reaktionsbereiche 2 und 7 ein Zwischenkondensator 6 vorgesehen, in dem durch Teilkondensation von schwerer siedenden Komponenten bei einer Temperatur zwischen -40°C und 50°C, bevorzugt zwischen -5°C und 40°C, die Konzentration von SiH₄, SiH₃Cl und SiH₂Cl₂ im Produktgemisch erhöht wird. Die Kondensationswärme wird von einem den Zwischenkondensator 6 durchströmenden Kühlmedium abgeführt. Die im Zwischenkondensator 6 nicht kondensierten, leichter siedenden Produktanteile werden zur weiteren Konzentrationserhöhung einem dem Zwischenkondensator in Strömungsrichtung der aufsteigenden Produktanteile nachgeschalteten zweiten reaktiv/destillativen Reaktionsbereich 7 und anschließend einem Verstärkerteil 8 zugeführt. Im Ausführungsbeispiel nach Figur 1 ist der Verstärkerteil 8 oberhalb des reaktiv/destillativen Reaktionsbereiches 7 eingesetzt und in die Reaktionskolonne 1 integriert. Der Verstärkerteil kann aber auch außerhalb der Reaktionskolonne angeordnet sein. Das aus dem Verstärkerteil 8 abziehende Produktgemisch wird schließlich vom Kopf der Reaktionskolonne über einen Abzug 9 in einen Kopfkondensator 10 geleitet, dort niedergeschlagen und als erhaltenes SiH₄-Endprodukt über eine SiH₄-Produktleitung 11 flüssig abgeführt. Ein Teil des gewonnenen SiH₄ wird über eine Zweigleitung 12 zum Kopf der Reaktionskolonne 1 zurückgeführt. Die Zweigleitung 12 mündet in die Kolonne oberhalb des Verstärkerteils 8.

Die, bei der Kondensation des SiH₄ im Kopfkondensator 10 als Rest anfallenden, inerten Gasanteile werden vom Kopfkondensator über eine Inertgasleitung 13 abgezogen.

Erfindungsgemäß wird in der Ausführungsform nach Figur 1 nach Kondensation des am Kopf der Reaktionskolonne 1 abgezogenen Produkts im Kopfkondensator 10 Silan in einer Konzentration von >70 %, bevorzugt >90 %, besonders bevorzugt >98 % gewonnen. Dabei erfolgt nach Disproportionierung von SiHCl₃ im reaktiv/destillativen Reaktionsbereich 2 erfindungsgemäß eine Zwischenkondensation des vom Reaktionsbereich zum Kopf der Reaktionskolonne 1 hin strebenden leichter siedenden SiH₄-haltigen Produktes. Der Zwischenkondensator 6 arbeitet bei Temperaturen, bei denen die Abführung der Kondensationswärme mit einem Kühlmedium noch zwischen -40°C und 50°C möglich ist, bevorzugt zwischen -5°C und 40°C, so dass nur ein anteiliger wesentlich kleinerer, nicht kondensierter Teil des SiH₄-, SiH₃Cl- und SiH₂Cl₂-haltigen Produktgemisches dem erfindungsgemäßen zweiten reaktiv/destillativen Reaktionsbereich 7 und dem mit normalen Einbauten für die Destillation, wie beispielsweise Böden und Packungen ausgestatteten Verstärkerteil 8 zugeführt wird. Nur der aus dem Verstärkerteil strömende Gasstrom ist schließlich im Kopfkondensator 10 bei sehr tiefen Temperaturen zu kondensieren.

Der Verstärkerteil 8 samt zugehörigem Kopfkondensator 10 kann auch außerhalb der Reaktionskolonne 1 extern angeordnet sein.

Bei den üblicherweise angewendeten Drücken von 500 mbar bis 50 bar, bevorzugt 1 bis 10 bar, und den gewünschten Reinheiten des Silanprodukts ist der Kopfkondensator 10 unterhalb der Kondensationstemperaturen von < - 40°C, meist sogar unter < - 60°C zu betreiben. Durch die Installation rein destillativer Trennabschnitte vor Kondensation des Silan-Endprodukts und das Anordnen eines destillativen Abtriebsteils 4 oberhalb des Sumpfverdampfers 5 wird die eingetragene Energie mehrfach genutzt, und zwar (1) zur Reinigung und Konzentrierung des Silans im Verstärkerteil 8, (2) zur ständigen destillativen Entfernung der bezogen auf die jeweiligen lokalen apparativen Verhältnisse leichter siedenden Zwischenprodukte bzw. Produkte und damit zur Erhöhung der Reaktionsgeschwindigkeit in den reaktiv/destillativen Reaktionsbereichen 2 und 7, und (3) zur Reinigung des SiCl₄ im unteren Teil der Reaktionskolonne. Durch den destillativen Abtriebsteil 4 und die dadurch mögliche Reinigung des am Sumpf entnommenen SiCl₄ entsteht ein weiterer Vorteil gegenüber dem aus DE-OS-2 507 864 bekannten Verfahren, weil eine nachfolgende Kolonne zur Reinigung des SiCl₄ entfallen kann und somit auch die für diesen Verfahrensschritt erforderliche Energie eingespart wird.

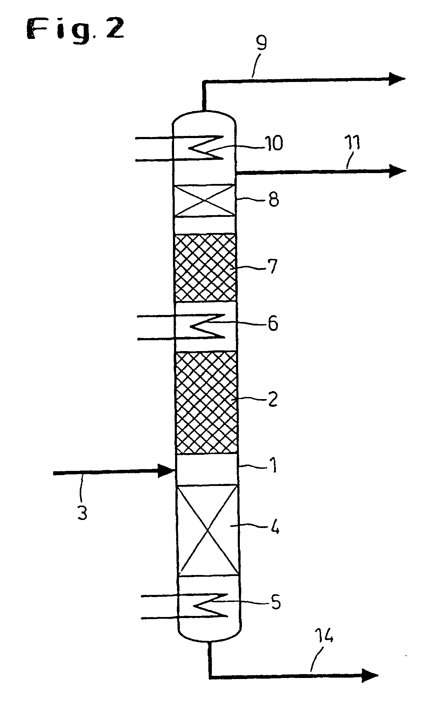

Figur 2 zeigt eine zweite Ausführungsform der Erfindung. Die Reaktionskolonne 1 entspricht im Aufbau im Wesentlichen der Ausführung nach Figur 1. Alle Apparateteile, die analog den Teilen nach Figur 1 gestaltet sind, werden mit dem gleichen Bezugszeichen angegeben. Abweichend zur bisher betrachteten Ausführung ist bei der Ausführungsform gemäß Figur 2 der Kopfkondensator 10 nicht extern, außerhalb der Kolonne, angebracht, sondern vielmehr in die Reaktionskolonne 1 integriert. Die Integration des Kopfkondensators 10 in die Reaktionskolonne 1 ist zum einen platzsparend und bietet zum anderen darüber hinaus sicherheitstechnische Vorteile, da der silanhaltige Holdup in der Anlage reduziert wird.

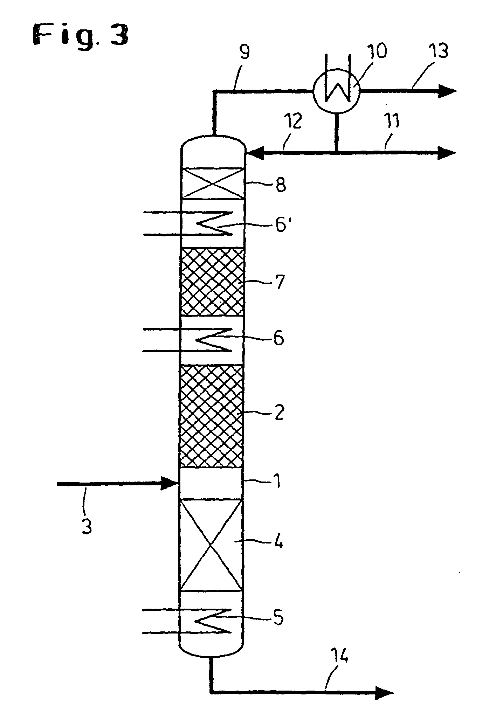

In Figur 3 ist als weiteres Beispiel eine dritte Ausführungsform gezeigt. Auch diese Ausführungsform entspricht im Wesentlichen der Ausführung nach Figur 1. Alle Apparateteile, die analog den Teilen nach Figur 1 gestaltet sind, werden mit dem gleichen Bezugszeichen angegeben. Die Reaktionskolonne 1 ist in der Ausführungsform gemäß Figur 3 nicht mit einem einzigen, sondern mit zwei Zwischenkondensatoren 6 und 6' ausgestattet. Die Verwendung von zwei oder mehreren Zwischenkondensatoren bietet die Möglichkeit, die Zwischenkondensationswärme auf verschiedenen Temperatumiveus mit geringen treibenden Temperaturdifferenzen exergetisch vorteilhaft abzuführen.

Vorteilhaft werden erfindungsgemäß 1 bis 5 Zwischenkondensatoren eingesetzt, vorzugsweise 1 bis 3, besonders bevorzugt 1 bis 2.

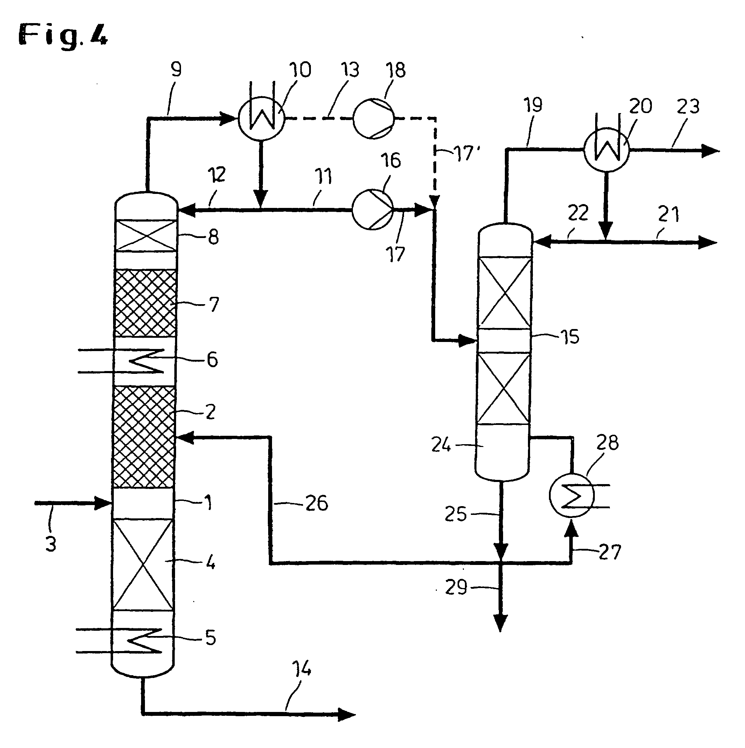

Ein viertes erfindungsgemäßes Ausführungsbeispiel ist in Figur 4 dargestellt. Dieses Beispiel zeigt die Verwendung einer an die Reaktionskolonne 1 des Ausführungsbeispiels 1 nachgeschaltete Trennkolonne 15 zur weiteren Aufkonzentrierung bzw. Reinigung des silanhaltigen Produktgemischs. Alle Apparateteile, die analog den Teilen nach Figur 1 gestaltet sind, werden mit dem gleichen Bezugszeichen angegeben. Die Trennkolonne 15 ist beim Ausführungsbeispiel nach Figur 4 dem Kondensator 10 nachgeschaltet, der zwischen Verstärkerteil 8 und Trennkolonne 15 angeordnet ist. Im Kondensator 10 wird das aus dem Verstärkerteil 8 über den Abzug 9 abströmende, nicht kondensierte SiH₄-haltige Produktgemisch vor Eintritt in die Trennkolonne 15 zumindest zu einem Teil kondensiert, so dass in die Trennkolonne 15 ein an SiH₄ höher aufkonzentriertes Produktgemisch eingeführt wird. Beispielsweise werden mindestens 30 % des aus dem Verstärkerteil 8 über den Abzug 9 abströmenden, nicht kondensierten SiH₄-haltigen Produktgemischs kondensiert. Vom im Kondensator 10 erzeugten Kondensat wird ein Teil über eine Zweigleitung 12 in die Reaktionskolonne 1 oberhalb ihres Verstärkerteils 8 als Rücklauf zurückgeführt. Der übrige Teil des Kondensats wird von einer Flüssigkeitspumpe 16 komprimiert und in einer Druckleitung 17 zur Trennkolonne 15 geführt. Wird im Kondensator 10 nur ein Teil des vom Verstärkerteil 8 abziehenden Produktgemisches kondensiert, wird der Rest über einen Abzug 13 mittels eines Kompressors 18 abgesaugt und komprimiert über eine Druckleitung 17' in die Trennkolonne 15 eingeleitet. Alternativ kann der Strom 13 auch einer Aufarbeitung zugeführt werden.

Vom Kopf der Trennkolonne 15 führt ein Abzug 19 zu einem Kopfkondensator 20, aus dem das gewonnene kondensierte und aufkonzentrierte bzw. gereinigte Silan in einer SiH₄-Produktleitung 21 abgeführt wird. Ein Teil des flüssigen Silans wird in einer Zweigleitung 22 zurück in die Trennkolonne 15 geleitet. Im Kopfkondensator als Rest anfallende inerte Gasanteile strömen über eine Inertgasleitung 23 ab.

Vom Sumpf 24 der Trennkolonne 15 wird das Sumpfprodukt der Trennkolone über einen Sumpfabzug 25 abgeführt. Ein Teil des Sumpfprodukts kann, falls gewünscht, über die Zweigleitung 26 in die Reaktionskolonne 1 zurückfließen, ein weiterer Teil wird über eine Rückführung 27 nach Verdampfung im Wärmetauscher 28 in den Sumpfbereich der Trennkolonne 15 zurückgeführt, ein weiterer Teil kann zur Ausschleusung von Verunreinigungen ganz aus der Anlage entnommen werden (29).

Im Ausführungsbeispiel nach Figur 4 wird zur Erhöhung der Kondensationstemperatur im Kondensator 10 und zur weiteren Absenkung der bei sehr niedriger Temperatur abzuführenden Kondensationsenergie durch Minderung der Rücklaufmenge gegenüber dem Ausführungsbeispiel nach Figur 1 und vollständiges oder teilweises Kondensieren im Kondensator 10 ein flüssiges oder gasförmiges Kopfprodukt mit geringerer Silanreinheit zwischen 25 % bis 90 % erzeugt. Dieses Kopfprodukt wird dann zur weiteren Reinigung in der nachgeschalteten Trennkolonne 15 getrennt, wobei ein gleicher oder vorzugsweise höherer Druck als in der Reaktionskolonne 1, vorzugsweise 15 bar bis 100 bar, eingestellt ist, so dass die Trennkolonne 15 folglich bei höheren Temperaturen, bezogen auf gleiche Zusammensetzung, arbeitet als die Reaktionskolonne 1. Auch bei dieser Variante kann das Sumpfprodukt der getrennt stehenden Trennkolonne 15 abhängig von den gewählten Betriebsbedingungen Anteile Trichlorsilan, Dichlorsilan und Monochlorsilan enthalten. Das Sumpfprodukt wird über die am Abzug 25 angeschlossene Zweigleitung 26 ganz oder teilweise in die Reaktionskolonne 1 zurückgeführt.

Die Zulaufmenge oder die Zulaufmengen in die Reaktionskolonne über die Zuleitungen 3 und gegebenenfalls 26, werden gemeinsam oder getrennt, gegebenenfalls nach Vorreaktion in einem Vorreaktor, in Abhängigkeit von der jeweiligen Zusammensetzung in den Abtriebsteil 4, zwischen den reaktiv/destillativen Reaktionsbereich 2 und Abtriebsteil 4, in die reaktiv-destillative Reaktionszone 2, in den Zwischenkondensator 6 und/oder in den reaktiv/destillativen Reaktionsbereich 7 geführt.

Das erfindungsgemäße Verfahren wird bei Drücken zwischen 500 mbar und 50 bar, vorzugsweise zwischen 1 bar und 10 bar, besonders bevorzugt zwischen 2 bar und 5 bar, im reaktiv/destillativen Reaktionsbereich mit katalytisch wirksamen Feststoffen betrieben. Mit den Drücken werden die Temperaturen im System beeinflußt. Die Temperaturen in den Abschnitten der reaktiv/destillativen Reaktionsbereiche, in denen die Disproportionierung stattfindet, liegen zwischen - 10°C und 180°C, vorzugsweise zwischen 20°C und 110°C. Die jeweils einzustellende Temperatur richtet sich nach dem Stabilitätsbereich der eingesetzten katalytisch wirksamen Feststoffe.

Nachteil der früher beschriebenen Verfahren zur destillativen Abtrennung von reinem Silan bei überlagerter Reaktion ist die große Wärmemenge, die bei der Kondensationstemperatur des Silans bei gegebenem Druck, also z.B. bei -50°C bis - 120°C abgeführt werden muß. Die Kondensation bei diesen Temperaturen ist, wie bereits erläutert, wirtschaftlich sehr ungünstig. Die bei Betrieb ohne Zwischenkondensator abzuführende Wärmemenge liegt in der gleichen Größenordnung wie die am Sumpf der Reaktionskolonne zugeführte Wärmemenge und die für die Wärmeabfuhr aufzubringenden Kosten dürften somit die Kosten für den Wärmeeintrag im allgemeinen deutlich übersteigen. Dies wird durch die erfindungsgemäße Zwischenkondensation größtenteils vermieden. Beispielsweise läßt sich schon bei Verwendung eines 25°C warmen Kühlmediums für die Zwischenkondensation zur Abkühlung des oberhalb des Zwischenkondensators bzw. oberhalb der Zwischenkondensatoren austretenden Gasstromes auf 40°C in Abhängigkeit vom Systemdruck 60 % bis 97 % der abzuführenden Kondensationswärme bei der Zwischenkondensation abführen, so dass nur noch 3 % bis 40 % der Kondensationswärme bei Kondensationstemperatur des Silans abgeführt werden müssen. Dennoch gelingt bereits oberhalb des Zwischenkondensators in einer auf den oberen Reaktionsbereich 7 aufgesetzten und/oder in einer getrennten aufgestellten Trennkolonne eine Reinigung des Silans auf vorzugsweise mehr als 90 % SiH₄, besonders bevorzugt mehr als 98 % SiH₄, wobei der zur Kondensation des Silans geeignete Kondensator am Kopf der Trennkolonne mit einer Kühlmitteltemperatur unterhalb der Kondensationstemperatur des Silans betrieben wird.

Die erfindungsgemäßen Anlagen enthalten in den Reaktionskolonnen vorzugsweise Einbauten, die einen intensiven Stoffaustausch zwischen Gas- und Flüssigphase gewährleisten und gleichzeitig einen intensiven Kontakt zum festen Katalysator erlauben. Aufgrund der Kombination von Stoffübergang und Reaktion wird in den reaktiv/destillativen Reaktionsbereichen durch die schnelle Abtrennung entstehender Produkte ein ausreichender Abstand vom jeweiligen chemischen Reaktionsgleichgewicht gewährleistet, so dass die Reaktion stets mit hoher Reaktionsgeschwindigkeit verläuft. Beispiele für solche Einbauten sind Böden, Packungen oder Füllkörper zum Einbringen heterogener Katalysatoren, wie sie z.B. in folgenden Druckschriften beschrieben sind: EP 670 178 A2, EP 461 855 A2, US-A-5 026 459, US-A-4 536 373, WO 94/08681 A1, WO 94/08682 A1, WO 94/08679 A1, EP 470 655 A1, WO 97/26971 A1, US-A-5 308 451, EP 755 706 A1, EP 781 829 A1, EP 428 265 A1, EP 448 884 A1, EP 640 385 A1, EP 631 813 A1, WO 90/02603 A1, WO 97/24174 A1, EP 665 041 A1, EP 458 472 A1, EP 476 938 A1 und deutsches Gebrauchsmuster 298 07 007.3. Es ist aber auch möglich, den katalytisch wirksamen Feststoff als solchen oder in einer agglomerierten Form auf Destillationsböden auszubreiten. Im Verfahren werden die Verweilzeit, das Volumen des katalytisch wirksamen Feststoffs und die destillative Trennwirkung im Reaktionsbereich auf die Reaktionskinetik und die Stoffübergangskinetik abgestimmt, wobei das Optimum der Parameter stark von den Randbedingungen wie z.B. vom gewählten katalytisch aktiven Feststoff, dem Stoffsystem und den gewählten Druck- und Temperaturbedingungen abhängt.

Alternativ kann der katalytisch aktive Feststoff in externe, gegebenenfalls temperierte Reaktoren eingebracht werden, wobei wechselweise die Flüssigphase von der Reaktionskolonne in den Reaktor und von dort zur Stofftrennung wieder zurück in die Reaktionskolonne geführt wird. Zur Entkopplung unterschiedlicher Temperaturen innerhalb der Reaktionsolonne und in externen Reaktoren ist eine Temperierung der Stoffströme zwischen Reaktionskolonne und den Reaktoren möglich.

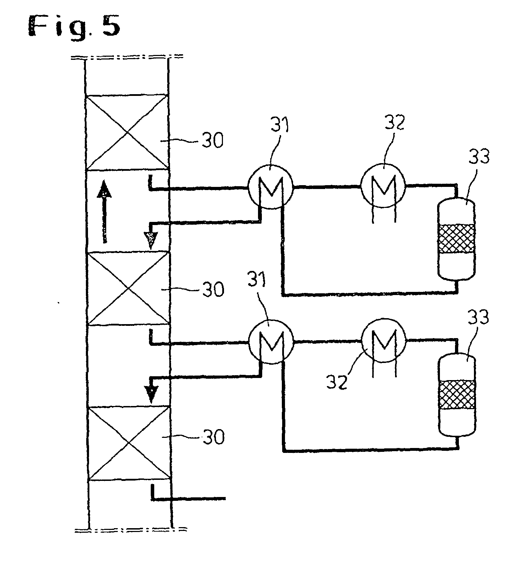

In Figur 5 ist eine erfindungsgemäße Ausführungsform dargestellt, in der die reaktiv/destillativen Reaktionsbereiche 2 und 7 aus den Figuren 1 bis 4 durch extern angeordnete Reaktoren ersetzt sind. Das aus einem destillativen Teil 30 ablaufende flüssige Gemisch gelangt, gegebenenfalls über Wärmerückgewinnung 31 und Temperierung 32 in einen von oben nach unten oder von unten nach oben durchströmten Reaktor 33 und daraus auf den nächsten destillativen Abschnitt. Die Sequenz "destillativer Abschnitt-Temperierung-Reaktor" läßt sich beliebig oft übereinander anordnen.

Die in den Reaktionsbereichen der Reaktionskolonnen ablaufende Disproportionierung wird gemäß der Erfindung durch eine rein destillative Abtrennung und Reinigung der an Kopf und Sumpf der Reaktionskolonnen auszuschleusenden Silan bzw. Siliciumtetrachlorid enthaltenden Produkte ergänzt. Die destillative Trennung wird mittels der üblichen Einbauten für die reine Destillation wie Böden, Packungen und Füllkörpern durchgeführt. Für die ablaufende schwerer siedende SiCl₄-Komponente ist es günstig, durch rein destillative Abtrennung unterhalb des reaktiv/destillativen Reaktionsbereiches im unteren Bereich der Reaktionskolonne ein weitgehend aufkonzentriertes Siliciumtetrachlorid mit mehr als 70 % SiCl₄, vorzugsweise mehr 95 % SiCl₄, besonders bevorzugt mehr als 99 % SiCl₄ als Sumpfprodukt zu erzeugen und dieses dem Sumpf der Reaktionskolonne zu entnehmen.

### Bezugszeichenliste

| | |
|---|---|
| Reaktionskolonne | 1 |
| reaktiv/destillativer Reaktionsbereich | 2 |
| SiHCl₃ - Zuleitung | 3 |
| destillativer Abtriebsteil | 4 |
| Sumpfverdampfer | 5 |
| Zwischenkondensator | 6, 6' |
| reaktiv/destillativer Reaktionsbereich | 7 |
| destillative Trennzone | 8 |
| Dampfabzug | 9 |
| Kopfkondensator | 10 |
| SiH₄-Produktleitung | 11 |
| Zweigleitung | 12 |
| Dampfabzugsleitung | 13 |
| SiCl₄-Abfluß | 14 |
| Trennkolonne | 15 |
| Flüssigkeitspumpe | 16 |
| Druckleitung | 17 |
| Kompressor | 18 |
| Dampfabzug | 19 |
| Kopfkondensator | 20 |
| SiH₄-Produktleitung | 21 |
| Zweigleitung | 22 |
| Dampfabzugsleitung | 23 |
| Sumpf | 24 |
| Sumpfabzug | 25 |
| Zweigleitung | 26 |
| Rückführung | 27 |
| Verdampfer | 28 |
| Ausschleusung | 29 |
| Destillationsteil | 30 |
| Wärmerückgewinnung | 31 |
| Temperierung/Wärmetauscher | 32 |
| Reaktor | 33 |

## Patentansprüche

1. Kontinuierliches Verfahren zur Herstellung von Silan SiH₄ durch katalytische Disproportionierung von Trichlorsilan SiHCl₃ zu Silan SiH₄ und Siliciumtetrachlorid SiCl₄, **dadurch gekennzeichnet, dass** die Disproportionierung in mindestens 2, katalytisch wirkenden Feststoff enthaltenden reaktiv/destillativen Reaktionsbereichen unter einem Druck im Bereich zwischen 500 mbar bis 50 bar durchgeführt wird, wobei das in einem ersten reaktiv/destillativen Reaktionsbereich erzeugte, leichter siedende SiH₄-haltige Produktgemisch im Temperaturbereich von -40°C bis 50°C zwischenkondensiert wird und das dabei nicht kondensierte, mit leichtflüchtigen Chlorsilanen - insbesondere mit Dichlorsilan SiH₂Cl₂, Monochlorsilan SiH₃Cl und Silan SiH₄-angereicherte Produktgemisch in mindestens einen weiteren reaktiv/destillativen Reaktionsbereich geführt wird und das im Zwischenkondensator kondensierte mit schwerflüchtigen Chlorsilanen angereicherte Gemisch, das insbesondere hohe Anteile an Trichlorsilan SiHCl₃ und Siliciumtetrachlorid SiCl₄ enthält, in den ersten Reaktionsbereich zurückgeführt wird.

2. Verfahren nach Anspruch 1, **dadurch gekennzeichnet, dass** das erzeugte leichter siedende SiH₄-haltige Produktgemisch im Kopfkondensator teilweise oder vollständig kondensiert wird.

3. Verfahren nach mindestens einem der Ansprüche 1 oder 2, **dadurch gekennzeichnet, dass** zwischen den Reaktionsbereichen insgesamt mehrere Zwischenkondensationen auf unterschiedlichen Temperaturniveaus im Bereich von -40°C bis 50°C vorgenommen werden.

4. Verfahren nach mindestens einem der Ansprüche 1 bis 3, **dadurch gekennzeichnet, dass** der Druck in den Reaktionsbereichen 1 bis 10 bar beträgt.

5. Verfahren nach mindestens einem der Ansprüche 1 bis 4, **dadurch gekennzeichnet, dass** die Zwischenkondensationen bei Temperaturen im Temperaturbereich zwischen -10°C und 50°C erfolgen.

6. Verfahren nach mindestens einem der Ansprüche 1 bis 5, **dadurch gekennzeichnet, dass** das im Kopfkondensator anfallende Produktgemisch in einer nachfolgenden Aufarbeitung bei einem gegenüber der Disproportionierung erhöhtem Druck getrennt wird.

7. Verfahren nach Anspruch 6, **dadurch gekennzeichnet, dass** Chlorsilane aus der Aufarbeitung des im Kopfkondensator anfallenden Produktgemisches zumindest zu einem Teil in den reaktiv/destillativen Reaktionsbereich zurückgeführt werden.

8. Verfahren nach mindestens einem der Ansprüche 1 bis 7, **dadurch gekennzeichnet, dass** das in den Reaktionsbereichen erzeugte leichter siedende Produkt in einer destillativen Trennzone auf einen Silangehalt >50 Gewichts-% aufkonzentriert wird, und das aufkonzentrierte Produktgemisch dem Kopfkondensator zugeführt wird.

9. Anlage zur Herstellung von Silan SiH₄ in kontinuierlicher Weise durch Disproportionierung von Trichlorsilan SiHCl₃ zu Silan SiH₄ und Siliciumtetrachlorid SiCl₄ in einer Reaktionskolonne mit einem Zulauf für SiHCl₃, sowie mit einem Kopfkondensator, der entweder an die Reaktionskolonne angeschlossen oder in die Reaktionskolonne integriert ist, zur Kondensation von erzeugtem SiH₄-haltigen Produkt und einem Abzug für kondensiertes SiH₄ am Kopfkondensator, und mit einem Abfluß an der Reaktionskolonne für als Sumpfprodukt anfallendes SiCl₄, **dadurch gekennzeichnet, dass** die Reaktionskolonne mindestens 2 übereinander angeordnete reaktiv/destillative Reaktionsbereiche aufweist, die Festkörper aus katalytisch wirkendem Feststoff enthaltende, von den Disproportionierungsprodukten und Trichlorsilan durchströmbare Katalysatorbetten aufweisen, und dass zwischen dem unteren der reaktiv/destillativen Reaktionsbereiche und dem Kopfkondensator zumindest ein Zwischenkondensator angeordnet ist, der bei einer Temperatur im Temperaturbereich von -40°C bis 50°C betrieben wird.

10. Anlage nach Anspruch 9, **dadurch gekennzeichnet, dass** ein Zwischenkondensator zwischen 2 übereinanderliegenden reaktiv/destillativen Reaktionsbereichen angeordnet ist.

11. Anlage nach mindestens einem der Ansprüche 9 bis 10, **dadurch gekennzeichnet, dass** im Zwischenkondensator eine Temperatur im Temperaturbereich von -5°C bis 40°C eingestellt ist.

12. Anlage nach mindestens einem der Ansprüche 9 bis 11, **dadurch gekennzeichnet, dass** zwischen dem untersten der reaktiv/destillativen Reaktionsbereiche und dem Kopfkondensator mehrere Zwischenkondensatoren angeordnet sind.

13. Anlage nach Anspruch 12, **dadurch gekennzeichnet, dass** die Zwischenkondensatoren jeweils oberhalb reaktiv/destillativer Reaktionsbereiche angeordnet sind.

14. Anlage nach mindestens einem der Ansprüche 9 bis 13, **dadurch gekennzeichnet, dass** dem obersten Zwischenkondensator in Strömungsrichtung des vom Zwischenkondensator abströmenden leichter siedenden Produktgemisches ein reaktiv/destillativer Reaktionsbereich und ein Verstärkerteil nachgeschaltet ist, in dem das Silan SiH₄ im Produktgemisch destillativ aufkonzentriert wird.

15. Anlage nach mindestens einem der Ansprüche 9 bis 14, **dadurch gekennzeichnet, dass** dem obersten Zwischenkondensator in Strömungsrichtung des vom Zwischenkondensator abströmenden leichter siedenden Produktgemischs eine Trennkolonne zur Trennung SiH₄-haltiger Produktanteile von schwerer siedenden Chlorsilan-Komponenten nachgeschaltet ist.

16. Anlage nach Anspruch 15, **dadurch gekennzeichnet, dass** die Trennkolonne einem Verstärkerteil gemäß Anspruch 14 nachgeschaltet ist.

17. Anlage nach Anspruch 16, **dadurch gekennzeichnet, dass** zwischen Verstärkerteil und Trennkolonne ein Kondensator angeordnet ist.

18. Anlage nach mindestens einem der Ansprüche 15 bis 17, **dadurch gekennzeichnet, dass** die Trennkolonne bei einem gegenüber dem Zwischenkondensator erhöhtem Druck arbeitet und das zur Trennkolonne geführte Produkt komprimiert wird

19. Anlage nach mindestens einem der Ansprüche 15 bis 18, **dadurch gekennzeichnet, dass** am Sumpfabzug der Trennkolonne eine Zweigleitung angeschlossen ist, die in einen reaktiv/destillativen Reaktionsbereich der Reaktionskolonne mündet.

## Claims

1. A continuous process for producing silane SiH₄ by catalytically disproportionating trichlorosilane SiHCl₃ to silane SiH₄ and silicon tetrachloride SiCl₄ **characterized in that** disproportionation is carried out in at least 2 reaction areas for reaction/distillation containing catalytically active solid under a pressure which ranges between 500 mbar and 50 bar, wherein the lower-boiling product mixture containing SiH₄ produced in a first reaction area for reaction/distillation is intercondensed at a temperature ranging between -40 °C and 50 °C and the product mixture which has not been condensed during the aforesaid step and which is enriched with highly volatile chlorosilanes, particularly with dichlorosilane SiH₂Cl₂, monochlorosilane SiH₃Cl and silane SiH₄, is passed into at least one further reaction area for reaction/distillation and the mixture which has been condensed in the intercondenser, which mixture is enriched with low-volatility chlorosilanes and contains in particular high amounts of trichlorosilane SiHCl₃ and silicon tetrachloride SiCl₄, is recycled into the first reaction area.

2. A process according to Claim 1 **characterized in that** the lower-boiling product mixture containing SiH₄ produced is partially or completely condensed in the top condenser.

3. A process according to at least one of Claims 1 or 2 **characterized in that**, in total, several intercondensations at different temperature levels ranging between -40 °C and 50 °C are carried out between the reaction areas.

4. A process according to at least one of Claims 1 through 3 **characterized in that** the pressure in the reaction areas is between 1 and 10 bar.

5. A process according to at least one of Claims 1 through 4 **characterized in that** the intercondensations take place at temperatures ranging between -10 °C and 50 °C.

6. A process according to at least one of Claims 1 through 5 **characterized in that** the product mixture produced in the top condenser is subjected to a subsequent reprocessing during which it is separated at an increased pressure, compared to disproportionation.

7. A process according to Claim 6 **characterized in that** chlorosilanes obtained during the reprocessing of the product mixture produced in the top condenser are recycled, at least in part, into the reaction area for reaction/distillation.

8. A process according to at least one of Claims 1 through 7 **characterized in that** the silane content of the lower-boiling product produced in the reaction areas is increased to a concentration of > 50 % by weight by means of distillation in a separating section and the product mixture whose concentration has thus been increased is supplied into the top condenser.

9. A facility for producing silane SiH₄ in a continuous manner by disproportionating trichlorosilane SiHCl₃ to silane SiH₄ and silicon tetrachloride SiCl₄ in a reaction column comprising an SiHCl₃ inlet and a top condenser, which is either connected to the reaction column or integrated into the reaction column, for condensing product containing SiH₄ produced and an exhaust for condensed SiH₄ arranged at the top condenser and an outlet arranged at the reaction column for SiCl₄ produced as a bottom product, which facility is **characterized in that** the reaction column comprises at least 2 reaction areas for reaction/distillation arranged one above the other and comprising catalyst beds which contain solid bodies formed of catalytically active solid matter and through which the disproportionation products and trichlorosilane can flow and **in that** at least one intercondenser is arranged between the lower one of the reaction areas for reaction/distillation and the top condenser, which intercondenser is operated at a temperature ranging between -40 °C and 50 °C.

10. A facility according to Claim 9 **characterized in that** an intercondenser is arranged between 2 reaction areas for reaction/distillation which are located one above the other.

11. A facility according to at least one of Claims 9 through 10 **characterized in that** a temperature ranging between -5 °C and 40 °C is set in the intercondenser.

12. A facility according to at least one of Claims 9 through 11 **characterized in that** several intercondensers are arranged between the lowest one of the reaction areas for reaction/distillation and the top condenser.

13. A facility according to Claim 12 **characterized in that** the intercondensers are arranged above reaction areas for reaction/distillation each.

14. A facility according to at least one of Claims 9 through 13 **characterized in that** downstream of the uppermost intercondenser, in the direction of flow of the lower-boiling product mixture flowing off the intercondenser a reaction area for reaction/distillation and a rectifying section are arranged, in which the concentration of silane SiH₄ in the product mixture is increased by means of distillation.

15. A facility according to at least one of Claims 9 through 14 **characterized in that** downstream of the uppermost intercondenser, in the direction of flow of the lower-boiling product mixture flowing off the intercondenser, a separating column is arranged for separating product components containing SiH₄ from higher-boiling chlorosilane components.

16. A facility according to Claim 15 **characterized in that** the separating column is arranged downstream of a rectifying section according to Claim 14.

17. A facility according to Claim 16 **characterized in that** a condenser is arranged between the rectifying section and the separating column.

18. A facility according to at least one of Claims 15 through 17 **characterized in that** the separating column operates at an increased pressure, compared to the intercondenser, and the product passed into the separating column is compressed.

19. A facility according to at least one of Claims 15 through 18 **characterized in that** a branch pipe is connected to the bottom drain of the separating column, which branch pipe opens into a reaction area for reaction/distillation of the reaction column.

## Revendications

1. Procédé continu de préparation de silane SiH₄ par dispropornation catalytique de trichlorosilane SiHCl₃ en silane SiH₄ et tétrachlorure de silicium SiCl₄, **caractérisé en ce que** la dispropornation est effectuée dans au moins deux zones réactionnelles de réaction/distillation contenant de la substance solide à action catalytique, sous une pression d'un ordre compris entre 500 mbars et 50 bars, procédé dans lequel le mélange produit qui est produit dans une première zone réactionnelle de réaction/distillation et contient du SiH₄ à bas point d'ébullition est condensé de manière intermédiaire dans la gamme de températures de -40°C à 50°C, le mélange produit non condensé, enrichi en chlorosilanes aisément volatils, en particulier en dichlorosilane SiH₂Cl₂, monochlorosilane SiH₃Cl et silane SiH₄ est guidé dans au moins une autre zone réactionnelle de réaction/distillation et le mélange condensé dans un condenseur intermédiaire et enrichi en chlorosilanes difficilement volatils, qui contient en particulier des fractions élevées de trichlorosilane SiHCl₃ et de tétrachlorure de silicium SiCl₄, est reconduit dans la première zone réactionnelle.

2. Procédé suivant la revendication 1, **caractérisé en ce que** le mélange produit contenant du SiH₄ aisément volatil qui est obtenu est condensé partiellement ou totalement dans un condenseur de tête.

3. Procédé suivant au moins l'une des revendications 1 et 2, **caractérisé en ce que**, entre les zones réactionnelles, on effectue au total plusieurs condensations intermédiaires à différents niveaux thermiques dans la gamme de -40°C à 50°C.

4. Procédé suivant au moins l'une des revendications 1 à 3, **caractérisé en ce que** la pression dans les zones réactionnelles est de 1 à 10 bars.

5. Procédé suivant au moins l'une des revendications 1 à 4, **caractérisé en ce que** les condensations intermédiaires ont lieu à des température situées dans la gamme comprise entre -10°C et 50°C.

6. Procédé suivant au moins l'une des revendications 1 à 5, **caractérisé en ce que** le mélange produit, qui est obtenu dans le condenseur de tête, est séparé dans un traitement ultérieur à une pression élevée par rapport à la dispropornation.

7. Procédé suivant la revendication 6, **caractérisé en ce que** des chlorosilanes sont, au moins pour une part, recyclés dans. la zone réactionnelle de réaction/distillation à partir du traitement du mélange produit qui est obtenu dans le condenseur de tête.

8. Procédé suivant au moins l'une des revendications 1 à 7, **caractérisé en ce que** le produit à faible point d'ébullition, qui est obtenu dans les zones réactionnelles, est, dans une zone de séparation par distillation, concentré à une teneur en silane >50% en poids, et **en ce que** le mélange produit concentré est reconduit au condenseur de tête.

9. Installation pour la préparation de silane SiH₄ d'une manière continue par dispropornation de trichlorosilane SiHCl₃ en silane SiH₄ et tétrachlorure de silicium SiCl₄ dans une colonne de réaction comportant une amenée pour du SiHCl₃ ainsi qu'un condenseur de tête qui est raccordé à la colonne de réaction ou est intégré dans la colonne de réaction, pour la condensation du produit contenant du SiH₄ obtenu, et une évacuation pour du SiH₄ condensé au condenseur de tête et une sortie sur la colonne de réaction pour le SiCl₄ obtenu sous la forme de produit de fond de colonne, **caractérisée en ce que** la colonne de réaction présente au moins deux zones réactionnelles de réaction/distillation qui sont agencées l'une au-dessus de l'autre et qui présentent des lits catalytiques contenant des corps solides à base d'une substance solide à action catalytique et traversables par les produits de dispropornation et du trichlorosilane et **en ce que**, entre la zone inférieure des zones réactionnelles de réaction/distillation et le condenseur de tête est agencé au moins un condenseur intermédiaire qui est mis en service à une température de la gamme comprise entre -40°C et 50°C.

10. Installation suivant la revendication 9, **caractérisée en ce qu'**un condenseur intermédiaire est agencé entre deux zones réactionnelles de réaction/distillation disposées l'une au-dessus de l'autre.

11. Installation suivant au moins l'une des revendications 9 et 10, **caractérisée en ce que**, dans le condenseur intermédiaire, une température de l'ordre de -5°C à 40°C est ajustée.

12. Installation suivant au moins l'une des revendications 9 à 11, **caractérisée en ce que** plusieurs condenseurs intermédiaires sont agencés entre la zone inférieure des zones réactionnelles de réaction/distillation et le condenseur de tête.

13. Installation suivant la revendication 12, **caractérisée en ce que** les condenseurs intermédiaires sont agencés chacun au-dessus de zones réactionnelles de réaction/distillation.

14. Installation suivant au moins l'une des revendications 9 à 13, **caractérisée en ce qu'**en aval du condenseur intermédiaire supérieur dans le sens d'écoulement du mélange produit à faible point d'ébullition qui s'écoule du condenseur intermédiaire, sont agencées une zone réactionnelle de réaction/distillation et une partie de renforcement dans laquelle le silane SiH₄ est concentré par distillation dans le mélange produit.

15. Installation suivant au moins l'une des revendications 9 à 14, **caractérisée en ce qu'**en aval du condenseur intermédiaire supérieur dans le sens d'écoulement du mélange produit à faible point d'ébullition qui s'écoule du condenseur intermédiaire, est agencée une colonne séparatrice pour séparer des fractions de produit contenant SiH₄ et des composants de chlorosilane à point d'ébullition plus élevé.

16. Installation suivant la revendication 15, **caractérisée en ce que** la colonne séparatrice est montée en aval d'une partie de renforcement conforme à la revendication 14.

17. Installation suivant la revendication 16, **caractérisée en ce qu'**un condenseur est agencé entre la partie de renforcement et la colonne séparatrice.

18. Installation suivant au moins l'une des revendications 15 à 17, **caractérisée en ce que** la colonne séparatrice fonctionne à une pression élevée par rapport au condenseur intermédiaire et **en ce que** le produit guidé vers la colonne séparatrice est comprimé.

19. Installation suivant au moins l'une des revendications 15 à 18, **caractérisée en ce qu'**à la sortie du fond de la colonne séparatrice est raccordé un branchement qui débouche dans une zone réactionnelle de réaction/distillation de la colonne de réaction.
